(19) Europäisches Patentamt
European Patent Office
Office européen des brevets

(11) Veröffentlichungsnummer : **0 394 791 B1**

(12) # EUROPÄISCHE PATENTSCHRIFT

(45) Veröffentlichungstag der Patentschrift :
**06.09.95 Patentblatt 95/36**

(51) Int. Cl.$^6$ : **G03C 1/89**

(21) Anmeldenummer : **90107140.7**

(22) Anmeldetag : **13.04.90**

(54) **Fotografisches Material mit einer Antistatikschicht.**

(30) Priorität : **27.04.89 DE 3913857**

(43) Veröffentlichungstag der Anmeldung :
**31.10.90 Patentblatt 90/44**

(45) Bekanntmachung des Hinweises auf die Patenterteilung :
**06.09.95 Patentblatt 95/36**

(84) Benannte Vertragsstaaten :
**BE DE FR GB**

(56) Entgegenhaltungen :
**DE-A- 3 416 897**

(73) Patentinhaber : **Agfa-Gevaert AG**
**Kaiser-Wilhelm-Allee**
**D-51373 Leverkusen (DE)**

(72) Erfinder : **Nittel, Fritz, Dr.**
**Emil-Nolde-Strasse 76**
**D-5090 Leverkusen (DE)**
Erfinder : **Randolph, Hartmut, Dr.**
**Gellertstrasse 6**
**D-5090 Leverkusen (DE)**
Erfinder : **Himmelmann, Wolfgang, Dr.**
**Im Ziegelfeld 7**
**D-5090 Leverkusen 3 (DE)**

EP 0 394 791 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung betrifft ein fotografisches Material, das auf einer Seite eines beidseitig mit einer Polyolefinbeschichtung versehenen opaken Schichtträgers mindestens eine Silberhalogenidemulsionsschicht und auf der anderen Seite eine Antistatikschicht enthält.

Es ist bekannt, mit Polyolefinen beschichtete Fotopapiere mit Rückschichten zu versehen, die dem Material antistatische Eigenschaften verleihen. Die antistatische Ausrüstung verhindert eine Beeinträchtigung der lichtempfindlichen Schichten eines fotografischen Materials durch sogenanntes Verblitzen, das z.B. beim Transport des Materials während des Begusses, bei der Konfektionierung oder in Verarbeitungsgeräten durch elektrische Entladungen verursacht werden kann. Statische elektrische Ladungen können z.B. durch die Reibung des fotografischen Materials an den Walzen oder an anderen Teilen der Vorrichtung, durch welche das Material hindurchläuft, oder durch Berührung mit rauhen Oberflächen verursacht werden. Das fotografische Material wird durch elektrostatische Entladungen belichtet. Es treten dann nach der fotografischen Verarbeitung unregelmäßige Streifen, Linien oder dunkle Punkte auf.

Die elektrostatische Aufladung der Oberfläche eines fotografischen Materials kann dadurch verhindert werden, daß man den Schutzschichten Mattierungsmittel zufügt, die die Adhäsion zweier aufeinanderliegender Materialien herabsetzt. Eine einmal entstandene Aufladung läßt sich durch elektrisch leitende Zusätze entfernen. Man kann auch beide Möglichkeiten kombinieren.

Als geeignet zur Unterdrückung der statischen Aufladung fotografischer Materialien ist eine Reihe monomerer und polymerer Verbindungen beschrieben worden, die aufgrund ihrer mattierenden Wirkung oder als Elektrolyte eine antistatische Wirkung zu entwickeln vermögen. Genannt seien in diesem Zusammenhang DE-A-23 37 392, DE-A-23 59 553, DE-A-23 11 126, DE-A-25 13 791 und DE-A-25 34 976.

Nachteilig an den bekannten Antistatikschichten ist das Fehlen oder die unzureichende Ausbildung von Eigenschaften, die insbesondere für die maschinell zu verarbeitende fotografische Materialien, besonders wichtig sind. Dazu gehört eine hohe Widerstandsfähigkeit gegen Abrieb an den Transportwalzen während des Auftragens der Emulsionsschichten oder beim Durchlaufen sogenannter Printer, die Unbeeinflußbarkeit der antistatischen Eigenschaften durch fotografische Verarbeitungsflüssigkeiten und die Sicherheit vor einer Verunreinigung dieser Flüssigkeiten durch Bestandteile der Antistatikschicht, ferner kein Kleben der Antistatikschicht, auch nicht bei hohen Wickelfriktionen sowie gute Bedruckbarkeit und Beschriftbarkeit mit den üblichen Pasten oder Tinten, einschließlich von Kugelschreiberpasten. Ein besonders störender Nachteil der bekannten Antistatikschichten ist ihre Verschmutzung in Walzentransportentwicklungsmachinen. Insbesondere in Maschinen, die zur Verarbeitung von Blattware ausgelegt sind und die textilbespannte Walzen enthalten, lagern sich auf der Rückseite des verarbeiteten Materials Schmutzfilme aus Entwickleroxidationsprodukten ab und zwar vor allem beim Anfahren der Maschinen und bei geringen Durchsätzen.

Außerdem besteht folgendes zusätzliches Problem: Bei hohen Gießgeschwindigkeiten der fotografischen Schicht kann es von Vorteil sein, daß die Unterlage am Gießsystem mit einer relativen Feuchte von 60-65 % ankommt. Das bedeutet, daß die Antistatikschicht, wenn sie in diesem Feuchtebereich über Walzen läuft, auch bei hohem Durchsatz keinen Abrieb zeigen darf. Da Antistatikschichten im allgemeinen Silikate in beträchtlichem Prozentsatz enthalten, nehmen sie rasch Wasser auf, worunter die Abriebfestigkeit leidet.

Versuche, silikatfreie Antistatikschichten herzustellen, scheitern daran, daß bei den geringen Aufträgen von 100-200 mg/m$^2$ entsprechend 0,1-0,2 µm Schichtdicke bei der hohen Rauhtiefe der rückseitigen PE-Schicht von Fotopapieren (4-8 µm) ohne Silikat kein zusammenhängender Schichtverband mehr entsteht, so daß die Leitfähigkeit stark zurückgeht, Beim Versuch, Latices einzusetzen treten eine Menge Probleme auf: Verschmutzung in Walzentransportmaschinen, Haftungsprobleme bei starker Belastung, vor allen in Kombination mit Antistatika, Abrieb bei weich eingestellten Latices, andererseits ungenügende Filmbildung bei hart eingestellten Latices.

In DE-A-3 416 897 ist ein fotografisches Material beschrieben, das auf der Rückseite des Schichtträgers eine silikathaltige Antistatikschicht trägt.

Es wurde nun gefunden, daß sich silikatfreie Antistatikschichten mit hoher Abriebfestigkeit, geringer Schmutzaufnahme und sehr guter Bedruckbarkeit dadurch einstellen lassen, daß als Bindemittel ein Gemisch aus einem carboxylgruppenhaltigen Ölbildner und einem Polymerlatex verwendet wird. Bevorzugte carboxylgruppenhaltige Ölbidner sind Bernsteinsäurehalbester, insbesondere solche der allgemeinen Formeln I und II

$R^1$-CH-COOH
      |
      $CH_2$-COOR$^2$          (I)

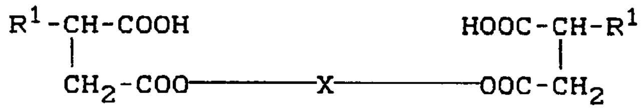

(II)

worin bedeuten

$R^1$ Alkyl oder Alkenyl mit 8-18 C-Atomen;

$R^2$ Alkyl mit 2-12 C-Atomen, geradkettig oder verzweigt und gegebenenfalls durch ein oder mehrere O-Atome unterbrochen (Polyetheralkyl), eine unsubstituierte oder substituierte Cycloalkyl- oder Arylgruppe, einen kondensierten Arylcycloalkyl-Rest, eine Aralkylgruppe oder die Gruppe

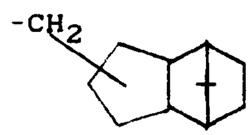

X Cyclohexylen,

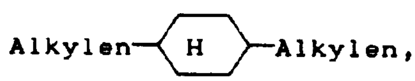

Cycloalkylen-Alkylen-Cycloalkylen oder eine der Gruppen $-CH_2-CH_2-(O-CH_2-CH_2)_{3-7}$ und

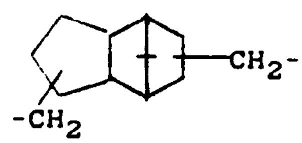

Die beschriebenen Bernsteinsäurehalbester-Verbindungen sind nach bekannten Verfahren in einfacher Weise herstellbare Verbindungen, deren mit $R^1$ bezeichneter Teil im Rahmen der für $R^1$ gegebenen Definition auf die für die vorliegende Anwendung interessanten Eigenschaften der Verbindungen relativ wenig Einfluß hat.

Bevorzugte Bernsteinsäurehalbester-Verbindungen, im folgenden kurz Bernsteinsäurehalbester genannt, enthalten als $R^1$ einen der einfach ungesättigten aliphatischen Reste $-C_{12}H_{23}$, $-C_{15}H_{29}$ oder $-C_{18}H_{35}$, deren Zustandekommen durch mehrfache Addition von Propylen erklärt werden kann.

Als Beispiele für bevorzugte Bernsteinsäurehalbester seien die folgenden Verbindungen genannt:

OF-1

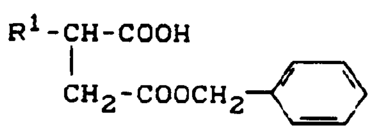

OF-2

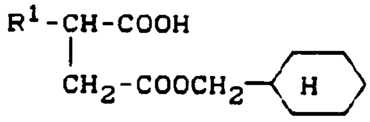

OF-3

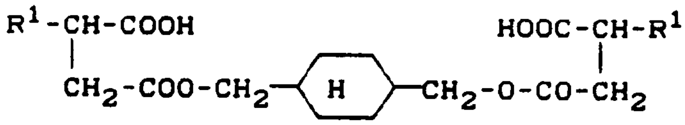

OF-4

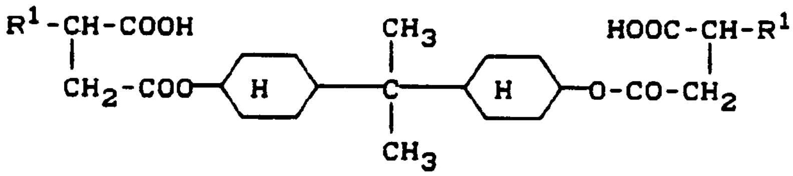

OF-5

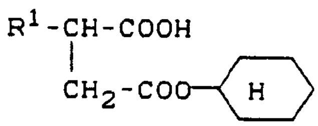

OF-6

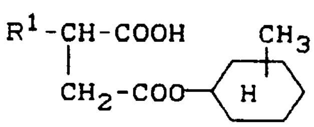

OF-7

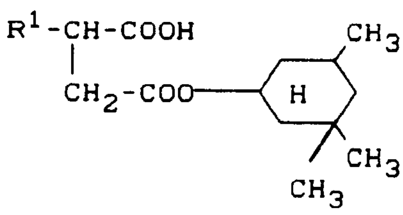

OF-8

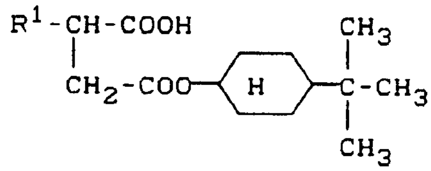

OF-9

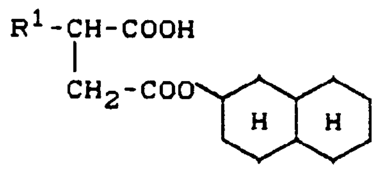

OF-10

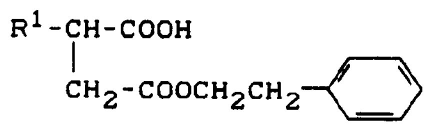

OF-11

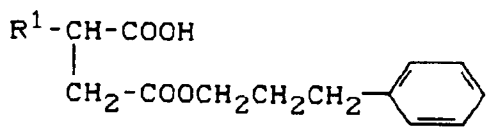

OF-12

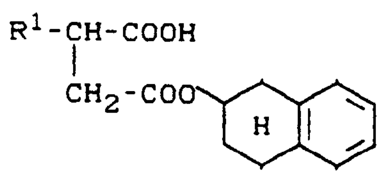

OF-13

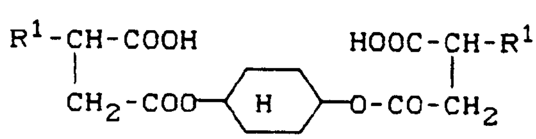

OF-14

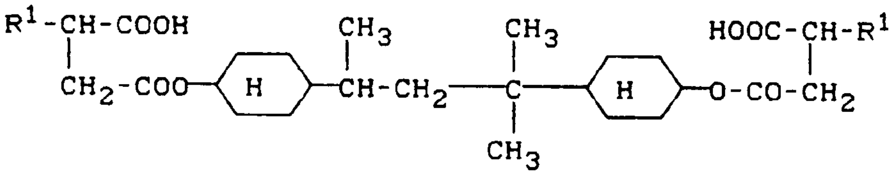

OF-15

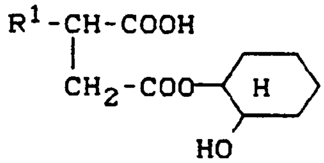

OF-16

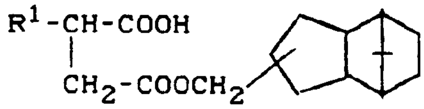

OF-17

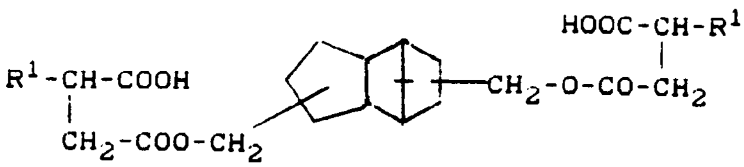

OF-18

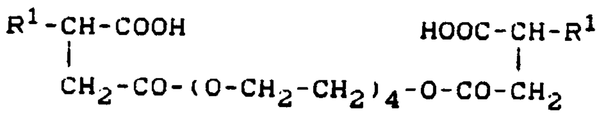

OF-19

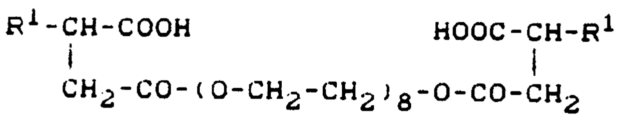

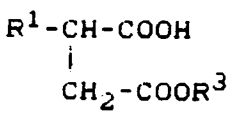

OF-20

$R^3 = -C_2H_5$

OF-21

$R^3 = -C_3H_7$

OF-22 $R^3 = C_3H_7\text{-}i$

OF-23 $R^3 = C_5H_{11}$

OF-24 $R^3 = -C_8H_{17}$

OF-25 $R^3 = -C_8H_{17}\text{-}i$

OF-26 $R^3 = -C_9H_{19}\text{-}i$

OF-27

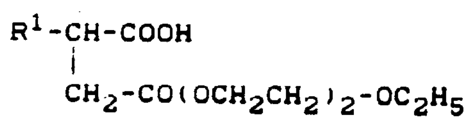

OF-28

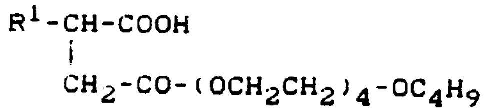

Die Herstellung der Bernsteinsäurehalbester ist allgemein bekannt und kann sehr einfach durch Veresterung von Alkoholen mit Bernsteinsäureanhydriden mit Hilfe saurer oder basischer Katalysatoren (z.B. Diazabicyclooctan) erfolgen. Die Herstellung wird z.B. in US-A-3 689 271 beschrieben.

In den Antistatikschichten der Erfindung können die carboxylgruppenhaltigen Ölbildner, insbesondere Bernsteinsäurehalbester einzeln oder als Mischung mehrerer dieser Verbindungen angewandt werden. Man verwendet sie zweckmäßigerweise als Öl/Wasser-Emulsionen (o/w-Emulsionen).

Bei der zweiten wesentlichen Komponente des Bindemittels der erfindungsgemäßen Antistatikschicht handelt es sich um einen Polymerlatex. Der Ausdruck "Polymerlatex" bezieht sich dabei auf die Form, in der das betreffende Polymerisat zur Anwendung gelangt. Naturgemäß liegt in der fertigen Antistatikschicht kein Latex im eigentlichen Wortsinn vor, sondern ein Latex in koagulierter Form.

Die verschiedensten Polymere können erfindungsgemäß in Latexform eingesetzt werden, und zwar insbesondere Homo- oder Copolymerisate von ethylenisch ungesättigten polymerisierbaren Verbindungen, wie auch Polyadditions- und Polykondensationsprodukte, beispielsweise Polyurethane.

Art und Zusammensetzung der Homopolymerisate und Copolymerisate sind in weiten Grenzen variierbar und können der nachfolgenden Filmbildungsmethode entsprechend angepaßt sein. Die Polymerisate werden der Gießlösung für die Antistatikschicht zweckmäßigerweise in Form eines Latex zugefügt, wobei der Latex einen durchschnittlichen Teilchendurchmesser von 0,01 bis 0,3 µm hat bei vorzugsweise enger Teilchengrößenverteilung.

Als Monomere und Comonomere für geeignete Latices kommen die folgenden Verbindungen in Frage:

Acrylsäureester, Methacrylsäureester, Styrol und substituierte Styrole, Acrylnitril, Methacrylnitril, Ester des Vinylalkohols, Diene, Vinylhalogenide und Vinylidenhalogenide, Vinylether und Olefine.

Geeignete Acrylate sind beispielsweise Methylacrylat, Ethylacrylat, Propylacrylat, Butylacrylat, Amylacrylat, 2-Ethylhexylacrylat, n-Octylacrylat, t-Octylacrylat, 2-Methoxyethylacrylat, 2-Butoxyethylacrylat, 2-Phenoxyethylacrylat, Chlorethylacrylat, Cyanethylacrylat, Dimethylaminoethylacrylat, Benzylacrylat, Methoxybenzylacrylat, Furfurylacrylat, Tetrahydrofurfurylacrylat und Phenylacrylat. Geeignete Methacrylate sind beispielsweise Methylmethacrylat, Ethylmethacrylat, Propylmethacrylat, Isopropylmethacrylat, Butylmethacrylat, Amylmethacrylat, Hexylmethacrylat, Cyclohexylmethacrylat, Benzylmethacrylat, Chlorbenzylmethacrylat, Octylmethacrylat, N-Ethyl-N-phenylaminoethylmethacrylat, 2-Methoxyethylmethacrylat, 2-(3-Phenylpropyloxy)ethylmethacrylat, 2-(4-Dimethylaminophenoxy)-ethylmethacrylat, Furfurylmethacrylat, Tetrahydrofurfurylmethacrylat, Phenylmethacrylat, Kresylmethacrylat und Naphthylmethacrylat. Geeignete Ester des Vinylalkohols sind z.B. Vinylacetat und Vinylpropionat. Als Diene kommen Butadien und Isopren in

Frage, als Olefine Ethylen, Tetrafluorethylen und Propylen. Geeignete Monomere sind ferner Maleinsäureanhydrid und Ester der Maleinsäure wie Dibutylmaleinat.

In welchen Gewichtsverhältnissen die Monomeren copolymerisiert werden müssen, damit das Copolymerisat die gewünschte Glasübergangstemperatur aufweist, läßt sich näherungsweise aus den Glasübergangstemperaturen der entsprechenden Homopolymerisate nach der Gleichung von Gordon-Taylor, J. Appl. Chem. 2, 492 (1952) abschätzen. Die $T_G$-Werte von üblichen Homopolymerisaten sind im "Polymer Handbook" von Brandrup et al, Interscience Publishers, Wiley & Sons, New York, 1966 zu entnehmen.

Die Glasübergangstemperatur geeigneter Polymerisate soll 100°C nicht übersteigen. Die Filmbildungstemperatur der Latices beim Trocknen soll bei 1-100°C, vorzugsweise jedoch bei 20-70°C liegen. Zu hohe Glasübergangstemperaturen von Homopolymerisaten oder Copolymerisaten lassen sich zwar durch den Zusatz von sogenannten Weichmachern wie Trikresylphosphat oder Dibutylphthalat in gewissen Grenzen erniedrigen, jedoch besteht dann die Gefahr, daß Ausschwitzungen der Weichmacher auftreten können.

Bevorzugte Polymere sind Copolymerisate des Vinylchlorids mit Methylacrylat, Methoxyethylacrylat, Butylacrylat, Butylmethacrylat oder Vinylacetat, Polymethylacrylat, Polybutylmethacrylat, Polypropylmethacrylat, Copolymerisate des Styrols mit Methylacrylat oder Butylacrylat, Butylacrylat-Acrylnitril-Copolymerisate und Butadien-Styrol-Copolymerisate.

Die in Latexform eingesetzten Homo- und Copolymerisate sind im Wasser schwerlöslich oder unlöslich. Zur Verbesserung der Emulgatbeständigkeit und Stabilität der Latices kann es sich aber empfehlen, bei der Herstellung der Polymerisate eine kleinere Menge eines gut wasserlöslichen Comonomers, z.B. Acrylsäure oder Methacrylsäure, mit einzupolymerisieren. So enthalten beispielsweise geeignete Polyacrylate oder Styrol-Butadien-Copolymerisate 2-5 Gew.-% Acrylsäure miteinpolymerisiert. Zur Herstellung kann beispielsweise verwiesen werden auf Houben-Weyl, Methoden der Organischen Chemie, Band XIV/1 (1961), Seiten 133 ff.

Die Polyurethane entstehen im allgemeinen durch Reaktion (Polyaddition) von Polyisocyanaten mit Verbindungen, die mehrere reaktionsfähige Wasserstoffatome enthalten. Bei letzteren unterscheidet man zwischen Verbindungen, die bereits eine gewisse Molekülgröße, z.B. ein Molekulargewicht von mindestens 300 aufweisen, wobei es sich meistens um Präkondensate, z.B. Polyester, Polyacetale, Polyether, Polyamide oder Polyesteramide handelt, und solchen Verbindungen mit geringerem Molekulargewicht, den sogenannten Kettenverlängerungsmitteln. Bei den reaktionsfähigen Wasserstoffatomen handelt es sich in der Regel um solche von Hydroxyl-, Amino- oder Carboxylgruppen. Gebräuchliche Ausgangsprodukte für die Herstellung von Polyurethanen sind beispielsweise hydroxylgruppenhaltige Polyester, insbesondere lineare Polyester mit zwei endständigen freien Hydroxylgruppen.

Als Polyisocyanate eignen sich insbesondere Diisocyanate, beispielsweise alle aromatischen und aliphatischen Diisocyanate, wie z.B. 1,5-Naphthylendiisocyanat, 4,4′-Diphenylmethandiisocyanat, 4,4′-Diphenyldimethylmethandiisocyanat, Di- und Tetraalkyldiphenylmethandiisocyanat, 4,4′-Dibenzyldiisocyanat, 1,3-Phenylendiisocyanat, 1,4-Phenylendiisocyanat, die Isomeren des Toluylendiisocyanats, gegebenenfalls in Mischung, chlorierte und bromierte Diisocyanate, vorzugsweise die aliphatischen Diisocyanate, Butan-1,4-diisocyanat, Hexan-1,6-diisocyanat, Dicyclohexylmethandiisocyanat, Cyclohexan-1,4-diisocyanat sowie auch Isocyanatgruppen enthaltende Prepolymere.

Zur Herstellung der Polyurethane kann beispielsweise verwiesen werden auf Houben-Weyl, Methoden der organischen Chemie, Band XIV/2, (1963), Seiten 57 ff.

Erfindungsgemäß können nicht nur nichtionische Polyurethane, sondern auch ionische Polyurethane, insbesondere anionische Polyurethane als Latex eingesetzt werden. Die Einführung der anionischen Gruppen in das Molekül der Polyurethane kann dadurch erreicht werden, daß bereits während der Polyadditionsreaktion, die zu den Polyurethanen führt, Verbindungen zugegen sind, die mindestens ein aktives Wasserstoffatom und mindestens eine anionische Gruppe oder eine in eine anionische Gruppe überführbare Gruppe enthalten. Diese letzteren Verbindungen werden dabei durch Reaktion mit einem Teil der vorhandenen Isocyanatgruppen in das Polymermolekül eingebaut. Soweit bei der Herstellung der Polyurethane die vorhandenen Isocyanatgruppen nicht vollständig verbraucht werden, kann die Einführung der anionischen Gruppen mittels der genannten Verbindungen auch im Anschluß an die Bildung der Polyurethane erfolgen. Wenn das Polyurethan alkylierbare oder acylierbare Gruppen enthält, kann die nachträgliche Einführung der anionischen oder anionisierbaren Gruppen in bekannter Weise auch durch Reaktion mit Verbindungen erreicht werden, die eine alkylierende oder acylierende Funktion aufweisen und bei der betreffenden Reaktion eine anionische Gruppe bilden können. Solche Verbindungen haben meist cyclische Struktur; Dicarbonsäureanhydride, Sulfone, Lactone, Epoxycarbonsäuren und cyclische Sulfate sind Beispiele hierfür.

Die Polyaddition kann beispielsweise unter Mitverwendung von Lösungsmitteln durchgeführt werden, wobei niedrigsiedende Lösungsmittel wie beispielsweise Aceton, Ethanol, Methanol, tert.-Butanol, Methylethylketon vorzugsweise geeignet sind, die gegebenenfalls anteilig Wasser enthalten können. Als Lösungsmittel für anorganische Basen sowie die Verbindungen mit mindestens einem mit Isocyanatgruppen reagierenden

Wasserstoffatom und mindestens einer anionischen Gruppe kann Wasser gegebenenfalls ohne Zusätze organischer Lösungsmittel verwendet werden.

Die entstehenden überwiegend linearen, hochmolekularen, anionische Gruppen enthaltenden Polyurethane können durch Zugabe von Wasser in die wäßrige Phase überführt und die organischen Lösungsmittel gleichzeitig oder anschließend entfernt werden. Man erhält Dispersionen in Form von Latices oder Lösungen. Verfahren zur Herstellung geeigneter anionische Gruppen enthaltender Polyurethane sind beispielsweise beschrieben in GB-A-1 076 688, US-A-3 479 310, US-A-4 108 814, US-4 092 286, DE-A-27 25 589 und DE-A-28 11 148.

Beispiele geeigneter Polymerlatices sind nachfolgend angegeben. Dabei bedeutet "carboxyliert", daß 100 Gewichtsteile (T.) Polymerfestsubstanz etwa 3,5 Gewichtsteile Acrylsäure einpolymerisiert enthalten.

| Polymerlatex | Styrol | Butadien [Gewichtsteile] | Acrylsäure |
|---|---|---|---|
| PL-1 | 90 | 6,5 | 3,5 |
| PL-2 | 75 | 21,5 | 3,5 |
| PL-3 | 69 | 27,5 | 3,5 |
| PL-4 | 65 | 31,5 | 3,5 |
| PL-5 | 63 | 33,5 | 3,5 |
| PL-6 | 60 | 36,5 | 3,5 |
| PL-7 | 58 | 38,5 | 3,5 |
| PL-8 | 56 | 40,5 | 3,5 |
| PL-9 | 46 | 50,5 | 3,5 |

PL 10 Polyadditionsprodukt aus
100 Gewichtsteilen Polyoxypropylen (M:2000)
und
100 Gewichtsteile 1,6-Hexamethylendiisocyanat,
abreagiert mit Wasser

PL-11 Polyadditionsprodukt aus
84 Gewichtsteilen Polyester aus
30 T. Adipinsäure
12 T. Neopentylglykol
22 T. Hexandiol
13,1 Gewichtsteilen 1,6-Hexandiisocyanat
2,7 Gewichtteilen Taurin

PL-12 Polycyclohexylmethacrylat, carboxyliert

PL-13 Polybenzylacrylat, carboxyliert

PL-14 Polycyclohexylacrylat, carboxyliert

PL-15 Polytetrafluorethylen

PL-16 Polyethylacrylat, carboxyliert.

Weitere geeignete Polymerisate, die erfindungsgemäß als Polymerlatex verwendet werden können, sind beispielsweise beschrieben in EP-A-0 280 238 auf den Seiten 10-14 ((P-1) bis (P-200)).

Weiterhin können auch Gemische von 2 oder mehr Polymerlatices verwendet werden. Man kann z.B. einen Latex mit einer hohen Glasübergangstemperatur mischen mit einem Latex mit einer niedrigeren Glasübergangstemperatur. Der letztere bildet dann den Film, in dem die Teilchen des Latex mit der höheren Glasübergangstemperatur eingeschlossen sind. Besonders geeignet ist beispielsweise ein Latexgemisch, dessen eine Komponente aus Polytetrafluorethylen und dessen andere Komponente aus einem der oben erwähnten Copolymerisatlatices besteht. Bevorzugt wird beispielsweise ein Gemisch, das 1 T. Polytetrafluorethylen und 1-4 T. eines gegebenenfalls carboxylierten Butadien-Styrol-Copolymerisats enthält.

Die aus dem carboxylgruppenhaltigen Ölbildner, insbesondere den Bernsteinsäurehalbestern hergestellten o/w-Emulsionen sind in flüssigem Zustand lange stabil (> 1 Jahr). Beim Auftrocknen solcher Emulsionen laufen die einzelnen Emulgattröpfchen spontan zusammen, wobei sich ein niedrig- bis mittelviskoser Ölfilm bildet, der sehr gute Spreitungseigenschaften hat. Beim Abmischen mit hart eingestellten Latices beobachtet man - unabhängig von der chemischen Natur des Latex - eine gute Verträglichkeit und eine gleichmäßige homogene Filmbildung ohne Entmischungserscheinungen.

Beim Stehen eines solchen Gemisches treten Auflöseeffekte an den Latex-Teilchen auf, wobei die Bernsteinsäurehalbester - in Abhängigkeit von der Gruppe $R^2$ - auch in schwach saurem Medium zumindest einen Quellvorgang am einzelnen Latex-Teilchen hervorrufen können.

Eine Verstärkung des Auflöseeffekts tritt auf, wenn das Gemisch o/w-Emulsion/Polymerlatex einige Zeit bei pH 9 gelagert wird (Anlösen der o/w-Emulsion).

Das Gewichtsverhältnis zwischen carboxylgruppenhaltigem Ölbildner und Polymerlatex (Festsubstanz) kann von 0,3:0,7 bis 0,95:0,05 reichen, je nach den gewünschten Schichteigenschaften.

Ferner können die Schichten enthalten:

Anionische Antistatika, z.B. Polystyrolsulfonsäure, oder kationische Antistatika z.B. Stearamidopropyldimethyl-β-hydroxyethylammoniumnitrat. Kationische Antistatika geben beim Zusatz zu anionisch stabilisierten Latices bzw. zu den o/w-Emulsionen Ausflockungen.

Es wurde nun gefunden, daß man kationische Antistatika zu einer Art von "amphoterem Antistatikum" umsetzen kann und zwar durch äquimolaren Umsatz mit geeigneten anionischen Netzmitteln:

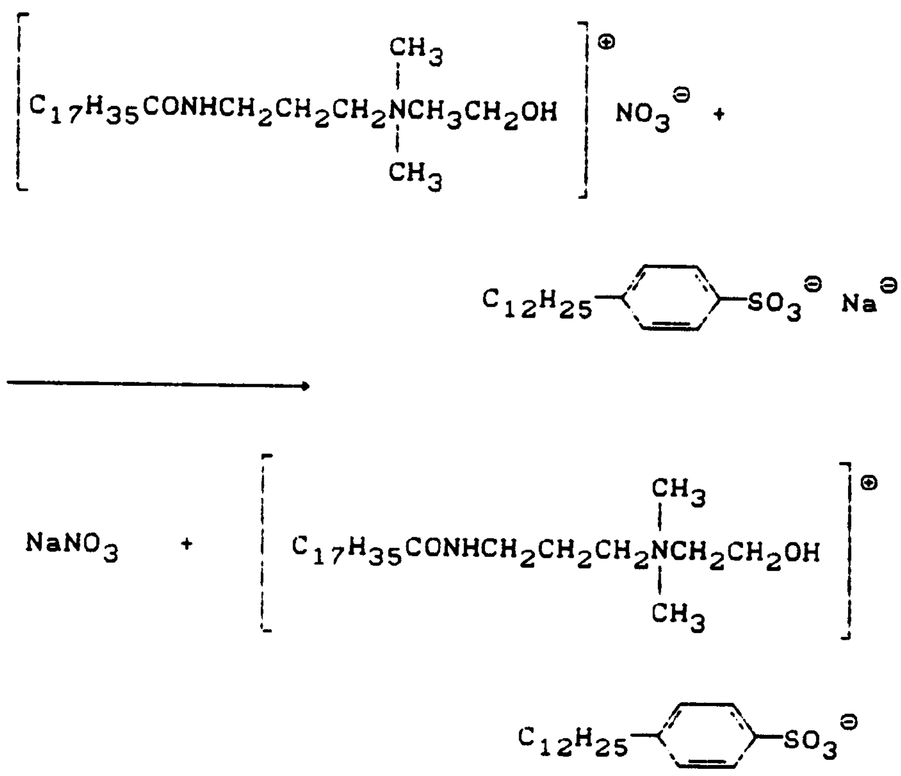

Die Umsetzung erfolgt zweckmäßigerweise in Ethanol, in dem das Reaktionsprodukt löslich ist. Bei Zugabe dieser alkoholischen Lösung zu Wasser erhält man eine o/w-Emulsion (selbstemulgierend). Es ist dabei von Vorteil, einen Überschuß von anionischem Netzmittel (ca. 5 %) einzusetzen.

Als besonders geeignete Netzmittel haben sich neben den Alkylbenzolsulfonaten (Alkyl = $C_8$-$C_{15}$) Sulfobernsteinsäureester der folgenden Formel III erwiesen:

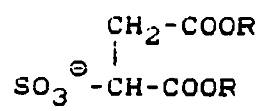

(III)

| Netzmittel | R (Formel III) |
|---|---|
| III-1 | $-C_4H_9$ |
| III-2 | $-CH(CH_3)-C_2H_5$ |
| III-3 | $-C_5H_{11}$ |
| III-4 | $-CH(CH_3)-C_3H_7$ |
| III-5 | $-C_6H_{13}$ |
| III-6 | $-CH_2-CH(C_2H_5)-C_4H_9$ |
| III-7 | $-C_8H_{17}$ |
| III-8 | $-CH(CH_3)-C_6H_{13}$ |
| III-9 | $-CH(CH_3)-C_7H_{15}$ |
| III-10 | $-CH_2-CH(C_2H_5)-C_5H_{11}$ |
| III-11 | $-CH_2-CH_2-CH(CH_3)-CH_2-C(CH_3)_3$ |
| III-12 | $-C_{10}H_{21}$ |
| III-13 | $-CH(CH_3)-C_8H_{17}$ |
| III-14 | $-CH_2-CH(C_4H_9)_2$ |
| III-15 | $-CH_2-CH_2-CH(CH_3)-[CH_2]_3-CH(CH_3)_2$ |
| III-16 | $-CH(CH_3)-CH_2-CH_2-CH(C_2H_5)-C_4H_9$ |
| III-17 | $-C_{12}H_{25}$ |
| III-18 | $-CH_2-CH(C_4H_9)-C_6H_{13}$ |
| III-19 | $-C_{13}H_{27}$ |
| III-20 | $-CH_2-CH(CH_3)-CH_2-CH=CH-CH_2-CH(C_2H_5)C_4H_9$ |
| III-21 | $-C_{18}H_{37}$ |
| III-22 | $-[CH_2]_{16}-CH=CH-[CH_2]_{15}-CH_3$ |
| III-23 | $-CH_2-CH_2-NH-CO-NH-C_4H_9$ |
| III-24 | $-CH_2-CH(CH_3)-NH-CO-NH-C_4H_9$ |
| III-25 | $-CH_2-CH_2-NH-CO-C_{11}H_{25}$ |
| III-26 | $-CH_2-CH_2-O-C_4H_9$ |
| III-27 | $-CH_2-CH_2-O-C_8H_{17}$ |
| III-28 | $-CH_2-CH_2-O-C_9H_{19}$ |

Einige geeignete Beispiele amphoterer Antistatika sind folgende Verbindungen:

AA-1

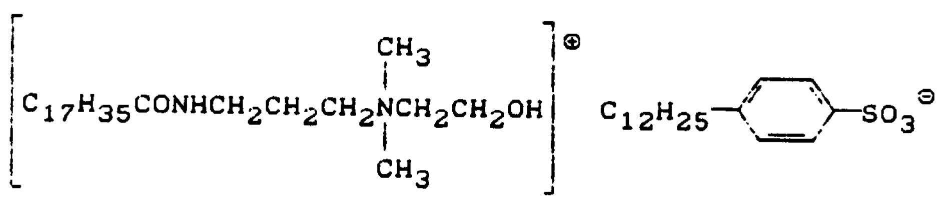

AA-2

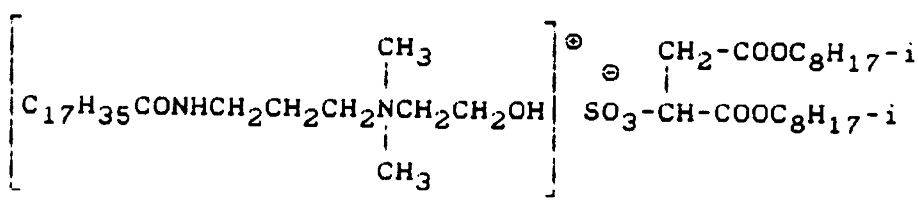

AA-3

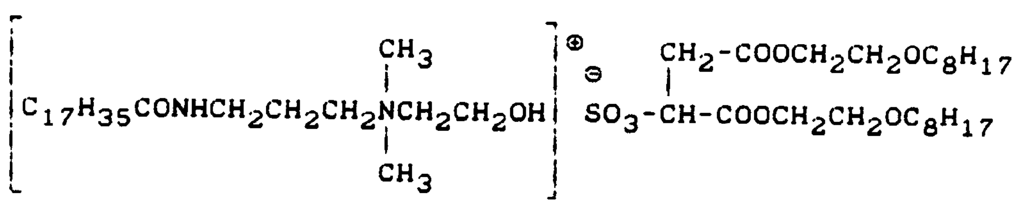

AA-4

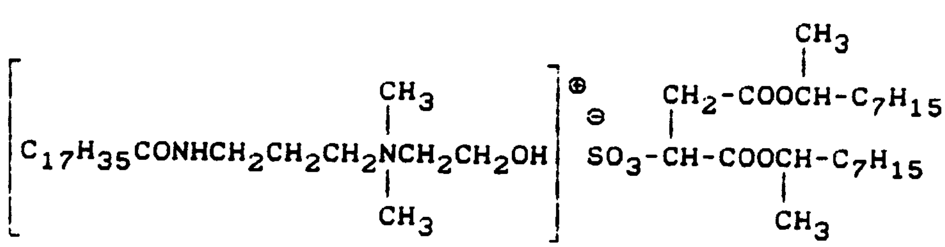

Die Verbindungen werden mit Vorteil mit der preisgünstigeren Polystyrolsulfonsäure (PSS) eingesetzt, wobei das Gewichtsverhältnis zwischen PSS und amphoteren Antistatika zwischen 0,98:0,02 uns 0,80:0,20 liegt. Bereits bei sehr geringem Zusatz der amphoteren Antistatika steigt die Leitfähigkeit um eine Zehnerpotenz.

Das Mischungsverhältnis von Bindemittel (carboxylgruppenhaltiger Ölbildner/Polymerlatex) zu Antistatikmittel (in Gewichtsteilen) liegt zwischen 0,6:0,4 und 0,9:0,1.

Außer den genannten Bestandteilen kann die Antistatikschicht die für fotografische Hilfsschichten bekannten Zusätze enthalten. Beispiele hierfür sind natürliche oder synthetische Bindemittel, z.B. Proteine, Cellulosederivate, Polysaccharide, Polyvinylalkohol, Polyvinylpyrrolidon, insbesondere aber Gelatine, lösliche Silikate, Beschichtungshilfsmittel, wie z.B. Netzmittel, Mattierungsmittel oder Bakterizide, weiter Verdickungsmittel

wie Cellulosesulfat oder Carboxymethylcellulose. Als Beschichtungshilfsmittel können in den Gießlösungen der erfindungsgemäßen Antistatikschichten die übliche Mittel wie z.B. die Natriumsalze von Sulfobernsteinsäuredioctylester, Dibutylnaphthalinsulfonsäure, Triisopropylnaphthalinsulfonsäure und insbesondere von Dodecylbenzolsulfonsäure verwendet werden.

Die vorliegenden Antistatikschichten werden in üblicher Weise durch Tauchen, Spritzen oder Rakeln auf die Rückseite des fotografischen Schichtträgers aufgebracht. Um eine bessere Haftung zu erzielen, empfiehlt sich eine Vorbehandlung, z.B. durch Corona-Bestrahlung gemäß DE-B-1 159 159. Nach Aufbringen der erfindungsgemäßen Antistatikschicht können dann auf die andere Seite des Schichtträgers die lichtempfindlichen fotografischen Silberhalogenidemulsionsschichten und Hilfsschichten aufgetragen werden.

Als geeignete Schichtträger seien Papiere genannt, die mit dem Polymeren eines α-Olefins mit 2 bis 20 Kohlenstoffatomen beschichtet sind, z.B. mit Polyethylen, Polypropylen oder Copolymeren von Ethylen und Propylen.

Die Antistatikschichten der Erfindung sind sowohl für Schwarz-Weiß-, als auch für farbfotografischen Materialien geeignet. Die Eigenschaften der fotografischen Schichten werden durch die erfindungsgemäße Antistatikschicht in keiner Weise nachteilig beeinflußt.

Andererseits werden weder die antistatischen Eigenschaften der erfindungsgemäßen Schichten durch die zur Verarbeitung der fotografischen Materialien angewandten Verarbeitungsflüssigkeiten noch die Verarbeitungsflüssigkeiten durch Bestandteile der erfindungsgemäßen Antistatikschichten beeinträchtigt. Die Antistatikschichten sind in hervorragender Weise abriebfest und somit von Vorteil für fotografische Materialien, die zur Verarbeitung in mit Textilwalzen ausgerüsteten Maschinen bestimmt sind.

Beispiel

Nachfolgend sollen Herstellung und Anwendung der hier beschriebenen Antistatikschichten weiter erläutert werden.

1. Herstellung der gebrauchsfertigen wäßrigen Emulsion eines Bernsteinsäurehalbesters (o/w-Emulsion):
In 9,97 l destilliertem Wasser werden 30 g Gelatine bei 40°C gelöst. Danach gibt man 40 g einer 80 gew.-%igen wäßrigen Phenollösung zu.
In diese Lösung wird bei 40°C eine Lösung von 3 kg Bernsteinsäurehalbester und 75 g Natriumdodecylbenzolsulfonat in 3 kg Diethylcarbonat mittels eines Intensivmischgerätes eingerührt. Nach Ende der Zugabe homogenisiert man die Emulsion in einem geeigneten Gerät bei 80 bar und destilliert das Hilfslösungsmittel danach ab. Der Wirkstoffgehalt liegt bei 19-20 %.

2. Herstellung von Antistatikgießlösungen und Herstellung der Antistatikschichten

2.1 Standard 1 (ohne Latex)

In
3,40 kg entsalztes Wasser werden nacheinander unter Rühren eingebracht:
2,22 kg o/w-Emulsion (19 %) der Verbindung OF-1 ($R^1 = C_{18}H_{35}$),
4,3 kg Polystyrolsulfonsaures Natrium (PPS), (5 %ig in Wasser),
0,08 kg Dodecylbenzolsulfonat (10 %ig) (DBS)

2.2 Standard 2 (ohne o/w-Emulsion)

In
4,76 kg entsalztem Wasser werden nacheinander eingebracht:
2,14 kg Latex PL-6 (20 %ig in Wasser)
4,3 kg PSS (5 %ig in $H_2O$)
0,08 kg DBS (10 %ig)

Die Standardlösungen 1 und 2, sowie auch die folgenden Beispiele gemäß der Erfindung werden mit einem Rakel auf die Rückseite von polyethylenbeschichtetem Papier mit einem Naßauftrag von 2,8 g/m² aufgebracht. Der Trockenauftrag liegt bei 180-200 mg/m².

In den folgenden Beispielen wird lediglich das Gewicht der einzelnen Bestandteile angegeben. Die Konzentration der einzelnen Stoffe ist identisch mit der in 2.1 bzw. 2.2.

Einsatz unterschiedlicher Latex-Mengen

2.3

3,22 kg entsalztes Wasser
2,22 kg o/w-Emulsion OF-1 ($R^1 = C_{18}H_{35}$)
4,3 kg PSS
0,18 kg Latex PL-6
0,08 kg DBS

2.4

2,95 kg entsalztes Wasser
2,22 kg o/w-Emulsion OF-1 ($R^1 = C_{18}H_{35}$)
4,3 kg PSS
0,45 kg Latex PL-6
0,08 kg DBS

2.5

2,68 kg Wasser
2,22 kg o/w-Emulsion OF-1 ($R^1 = C_{18}H_{35}$)
4,3 kg PSS
0,72 kg Latex PL-6
0,08 kg DBS

2.6

3,42 kg Wasser
1,3 kg o/w-Emulsion OF-11 ($R^1 = C_{18}H_{35}$)
4,3 kg PSS
0,9 kg Latex PL-6
0,08 kg DBS

Einsatz unterschiedlicher o/w-Emulsionen

Die folgenden Versuche erfolgten analog Versuch 2.3 wobei lediglich die o/w-Emulsionen unterschiedlicher Bernsteinsäurehalbester eingesetzt wurden.

2.7 o/w-Emulsion OF-2 ($R^1 = C_{15}H_{29}$)
2.8 o/w-Emulsion OF-4 ($R^1 = C_{12}H_{23}$)
2.9 o/w-Emulsion OF-3 ($R^1 = C_{18}H_{35}$)
2.10 o/w-Emulsion OF-16 ($R^1 = C_{18}H_{35}$)
2.11 o/w-Emulsion OF-18 ($R^1 = C_{15}H_{29}$)
2.12 o/w-Emulsion OF-25 ($R^1 = C_{18}H_{35}$)

Einsatz unterschiedlicher Latices

Die Versuche erfolgten analog Versuch 2,3 wobei lediglich unterschiedliche Latices eingesetzt wurden.

2.13 Latex PL-2
2.14 Latex PL-4
2.15 Latex PL-5
2.16 Latex PL-7
2.17 Latex PL-9
2.18 Latex PL-12
2.19 Latex PL-13
2.20 Latex PL-14
2.21 Latex PL-11
2.22 Latex PL-10
2.23 Latex PL-15
2.24 Latex PL-17
2.25 Latex PL-18

2.29

2,98 kg Wasser
1,3 kg o/w-Emulsion OF-4 ($R^1 = C_{12}H_{23}$)
4,3 kg PSS
0,9 kg Latex PL-6
0,16 kg DBS
0,36 kg Antistatikum AA-1 (10 %ig)

2.30

2,98 kg Wasser
1,3 kg o/w-Emulsion OF-4 ($R^1 = C_{12}H_{23}$)
4,3 kg PSS
0,9 kg Latex PL-6
0,16 kg DBS
0,36 kg Antistatikum AA-2 (10 %ig)

(Leitfähigkeitsvergleich zu Versuch 2.3)

2.31

3,22 kg Wasser
2,22 kg o/w-Emulsion OF-4 ($R^1 = C_{18}H_{35}$)
4,3 kg PSS
0,18 kg Latex PL-6
0,08 kg DBS
0,07 kg Anstistatikum AA-1 (10 %ig)

Weitere Antistatikgießlösungen:

2.32

3,01 kg Wasser
2,07 kg o/w-Emulsion OF-3 ($R^1 = C_{18}H_{35}$)
4,3 kg PSS
0,54 kg Latex PL-6 und PL-11 (3:1)
0,08 kg DBS

2.33

3,05 kg Wasser
1,5 kg o/w-Emulsion OF-9 ($R^1 = C_{18}H_{35}$)
4,3 kg PSS
1,07 kg Latex PL-6 und PL-11 (3:1)
0,08 kg DBS

2.34

3,05 kg Wasser
1,32 kg o/w-Emulsion OF-3 ($R^1 = C_{18}H_{35}$)
4,3 kg PSS
1,25 kg Latex PL-6 und PL-11 (3:1)
0,08 kg DBS

2.35

3,06 kg Wasser
1,13 kg o/w-Emulsion OF-3 ($R^1 = C_{18}H_{35}$)
4,3 kg PSS
1,43 kg Latex PL-6 und PL-11 (3:1)
0,08 kg DBS

2.36

3,09 kg Wasser
0,56 kg o/w-Emulsion OF-3 ($R^1 = C_{18}H_{35}$)
4,3 kg PSS
1,97 kg Latex PL-6 und PL-11 (3:1)
0,08 kg DBS

2.37

3,01 kg Wasser
2,07 kg o/w-Emulsion OF-3 ($R^1 = C_{18}H_{35}$)
4,3 kg PSS
0,54 kg Latex PL-15
0,08 kg DBS

2.38

3,05 kg Wasser
1,5 kg o/w-Emulsion OF-1 ($R^1 = C_{18}H_{35}$)
4,3 kg PSS
1,07 kg Latex PL-15
0,08 kg DBS

2.39

3,05 kg Wasser
1,32 kg o/w-Emulsion OF-1 ($R^1 = C_{18}H_{35}$)
4,3 kg PSS
1,25 kg Latex PL-15
0,08 kg PSS

2.40

3,06 kg Wasser
1,13 kg o/w-Emulsion OF-1 ($R^1 = C_{18}H_{35}$)

4,3 kg PSS
1,43 kg Latex PL-15
0,08 kg DBS

2.41

3,09 kg Wasser
0,56 kg o/w-Emulsion OF-1 ($R^1 = C_{18}H_{35}$)
4,3 kg PSS
1,97 kg Latex PL-15
0,08 kg DBS

2.42

3,01 kg Wasser
2,07 kg o/w-Emulsion OF-1 ($R^1 = C_{18}H_{35}$)
4,3 kg PSS
0,54 kg Latex PL-6 und PL-15 (3:1)
0,08 kg DBS

2.43

3,05 kg Wasser
1,5 kg o/w-Emulsion OF-1 ($R^1 = C_{18}H_{35}$)
4,3 kg PSS
1,07 kg Latex PL-6 und PL-15 (3:1)
0,08 kg DBS

2.44

3,05 kg Wasser
1,32 kg o/w-Emulsion OF-1 ($R^1 = C_{18}H_{35}$)
4,3 kg PSS
1,25 kg Latex PL-6 und PL-15 (3:1)
0,08 kg DBS

2.45

3,06 kg Wasser
1,13 kg o/w-Emulsion OF-1 ($R^1 = C_{18}H_{35}$)
4,3 kg PSS
1,43 kg Latex PL-6 und PL-15 (3:1)
0,08 kg DBS

2.46

3,09 kg Wasser
0,56 kg o/w-Emulsion OF-1 ($R^1 = C_{18}H_{35}$)
4,3 kg PSS
1,97 kg Latex PL-6 und PL-15 (3:1)
0,08 kg DBS

3. Prüfverfahren

Die Neigung einer Antistatikschicht zur Schmutzaufnahme beim Durchgang des fotografischen Materials durch eine Verarbeitungsmaschine wird in folgender Weise geprüft: Eine mit einem Polypropylengewebe bespannte Textilwalze, die in Kontakt mit einer Andruckwalze aus Stahl steht, taucht in eine mit Entwickler gefüllte Schale ein. Die Textilwalze wird durch einen Motor angetrieben. Den Entwickler führt man im Kreislauf über einen Thermostaten und temperiert ihn so auf 30°C. Für die Prüfung wird ein Entwickler verwendet, durch den als Vorbereitung für die Prüfung 2 Tage lang Luft geleitet wurde. Der Grad der Schmutzaufnahme wird anhand der Zahlenskala 1 (starke Verschmutzung) bis 5 (keine merkliche Verschmutzung) bewertet.

1 Liter des Entwicklers enthalten:

| | | |
|---|---|---|
| Ölsäure-N-Methyltaurid, Na-salz | 0,05 | g |
| Diethylenglykol | 50,0 | ml |
| Benzylalkohol | 20,0 | ml |
| Weißtöner (Na-Salz) | 1,5 | g |
| Fluortensid 4 %ig | 0,13 | ml |
| Caprolactam | 5,0 | g |
| 4-Amino-N-ethyl-N-(3-methylsulfonamido-ethyl)-m-toluidin | 6,6 | g |
| 1-Hydroxyethan-1,1-diphosphonsäure-di-Natriumsalz | 0,16 | g |
| Hydroxylaminsulfat | 6,0 | g |
| Nitrilotriessigsäure Na-Salz | 0,6 | g |
| Diethylentriaminpentaessigsäure Na-Salz | 0,77 | g |
| Kaliumcarbonat | 34,0 | g |
| Kaliumhydroxid | 3,6 | g |

Für die Prüfung der Proben wird die beschriebene Vorrichtung in folgender Weise eingesetzt:

Die Prüflinge (9 x 23 cm) werden in Längsrichtung durch das Gerät geschickt und zwar so, daß die Antistatikschicht über die Textilwalze läuft. Dann wäscht man mit fließendem Wasser, trocknet das Material und bewertet die Schmutzaufnahme.

Die Prüfung des Abriebs geschieht in folgender Weise: 1200 m eines mit der erfindungsgemäßen Antistatikschicht ausgerüsteten Materials in einer Breite von 8,9 cm werden durch einen handelsüblichen Colorprinter geschickt. Nachdem die Materialbahn das Gerät durchlaufen hat, prüft man die Oberfläche der Walzen, die mit der Antistatikschicht in Berührung gekommen sind, und benotet die auf der Oberfläche zurückgebliebene Menge an Abrieb mit 1 bis 5, wobei 1 "starker Abrieb" und 5 "kein Abrieb" bedeutet.

Zur Prüfung der Schichtfestigkeit und das Antistatikgemisch auf Glasplatten gegossen (Trockendicke 55°C) getrocknet. Nach Angleichung auf 60-65 % rel. Feuchte wird mit einem Gummistopfen ein Abriebversuch durchgeführt und mit Noten 1-5 klassifiziert: 1 = sehr schlecht, 5 = sehr gut).

Die Prüfung der Bedruckbarkeit der Antistatikschichten nimmt man wie folgt vor: die mit der Antistatikschicht versehene Rückseite des Materials wird mittels Schreibmaschinentypen über ein schwarzes Farbband bedruckt, das auch im Printer eingesetzt wird.

Die Proben werden 1 min in einem Colorentwickler bei 20°C behandelt, mit Wasser kurz abgespült und die bedruckten bzw. beschrifteten Stellen kräftig mit den Fingern abgerieben.

Ist der Druck einwandfrei, wird das Ergebnis mit 5 bewertet. Die schlechteren Ergebnisse bekommen Noten 4 bis 1.

Die Bestimmung des Oberflächenwiderstandes wurde entsprechend DIN 53 482 durchgeführt.

Die Beschriftbarkeit der Proben wird mit Bleistiften unterschiedlichen Härtegrades durchgeführt (EW = extra weich, W = weich, N = normal). Die Beurteilung steht wie oben von 5 (sehr gut) bis schlecht = 1, wobei die einzelnen Härtegrade angefügt werden z.B.: 5 EW, 3 W, 2 N.

Die Ergebnisse sind in nachfolgender Tabelle aufgelistet.

| Versuchs Nr. | Oberflächenwiderstand bei 50% R.F. in Ω/cm | Abriebprinter | Schmutzaufnahme (Teer) | Bedruckbarkeit Farbband | Bedruckbarkeit Thermodruck | Beschriftbarkeit Bleistift | Schichtfestigkeit |
|---|---|---|---|---|---|---|---|
| ST. 2.1 | $5 \times 10^{10}$ | 2 | 5 | 5 | 5 | 2 EW | 1-2 |
| ST. 2.2 | $2 \times 10^{9}$ | 5 | 3 | 2 | 1 | 1 EW | 5 |
| 2.3 | $9 \times 10^{9}$ | 5 | 5 | 5 | 5 | 3 EW | 4 |
| 2.4 | $6 \times 10^{9}$ | 5 | 5 | 5 | 4-5 | 3 EW | 4 |
| 2.5 | $5 \times 10^{9}$ | 5 | 5 | 5 | 3-4 | 2 EW | 4 |
| 2.6 | $5 \times 10^{9}$ | 5 | 5 | 2 | 3-4 | 2 EW | 5 |
| 2.7 | $8 \times 10^{9}$ | 5 | 5 | 5 | 5 | 3 EW | 4 |
| 2.8 | $1 \times 10^{10}$ | 5 | 5 | 5 | 5 | 2 EW | 5 |
| 2.9 | $7 \times 10^{9}$ | 5 | 5 | 5 | 5 | 3 EW | 4-5 |
| 2.10 | $8 \times 10^{9}$ | 5 | 5 | 5 | 5 | 3 EW | 4 |
| 2.11 | $5 \times 10^{9}$ | 4-5 | 5 | 5 | 4 | 2 EW | 4 |
| 2.12 | $7 \times 10^{9}$ | 4-5 | 5 | 5 | 5 | 3 EW | 4 |
| 2.13 | $8 \times 10^{9}$ | 5 | 5 | 4 | 5 | 2 EW | 5 |
| 2.14 | $6 \times 10^{9}$ | 5 | 5 | 5 | 4 | 3 EW | 5 |
| 2.15 | $8 \times 10^{9}$ | 5 | 5 | 5 | 5 | 2 EW | 5 |
| 2.16 | $9 \times 10^{9}$ | 5 | 4-5 | 5 | 5 | 3 EW | 5 |
| 2.17 | $7 \times 10^{9}$ | 5 | 4 | 4-5 | 4-5 | 2 EW | 4 |
| 2.18 | $9 \times 10^{9}$ | 5 | 5 | 4 | 3-4 | 2 EW | 3-4 |
| 2.19 | $7 \times 10^{9}$ | 5 | 4-5 | 4-5 | 4 | 2 EW | 3-4 |
| 2.20 | $5 \times 10^{9}$ | 5 | 5 | 4-5 | 4 | 3 EW | 3-4 |
| 2.21 | $6 \times 10^{9}$ | 4-5 | 4 | 4-5 | 4 | 2 EW | 3-4 |
| 2.22 | $8 \times 10^{9}$ | 4-5 | 4 | 4 | 4-5 | 2 EW | 3-4 |
| 2.23 | $5 \times 10^{9}$ | 5 | 5 | 4 | 5 | 3 EW | 4 |
| 2.24 | $7 \times 10^{9}$ | 5 | 5 | 4 | 3-4 | 2 EW | 4 |
| 2.25 | $6 \times 10^{9}$ | 5 | 5 | 4 | 5 | 3 EW | 4-5 |

| Versuchs Nr. | Oberflächen-widerstand bei 50% R.F. in Ω/cm | Abrieb-printer | Schmutzaufnahme (Teer) | Bedruckbarkeit Farbband | Bedruckbarkeit Thermodruck | Beschriftbarkeit Bleistift | Schichtfestigkeit |
|---|---|---|---|---|---|---|---|
| 2.29 | $3 \times 10^9$ | 5 | 4 | 4 | 5 | 2 EW | 5 |
| 2.30 | $1 \times 10^9$ | 5 | 4-5 | 4 | 5 | 2 EW | 5 |
| 2.31 | $3 \times 10^9$ | 5 | 5 | 5 | 5 | 3 EW | 4 |
| 2.32 | $7 \times 10^9$ | 4 | 5 | 5 | 5 | 3 EW | 4 |
| 2.33 | $5 \times 10^9$ | 5 | 5 | 5 | 5 | 3 EW | 5 |
| 2.34 | $3 \times 10^9$ | 5 | 5 | 5 | 5 | 3 EW | 5 |
| 2.35 | $5 \times 10^9$ | 5 | 5 | 5 | 5 | 3 EW | 5 |
| 2.36 | $6 \times 10^9$ | 5 | 4-5 | 4 | 4-5 | 3 EW | 5 |
| 2.37 | $3 \times 10^9$ | 4 | 5 | 5 | 5 | 2 EW | 3 |
| 2.38 | $4 \times 10^9$ | 5 | 5 | 5 | 5 | 2 EW | 3-4 |
| 2.39 | $2 \times 10^9$ | 5 | 5 | 5 | 5 | 2 EW | 4 |
| 2.40 | $2 \times 10^9$ | 5 | 5 | 4-5 | 5 | 3 EW | 4 |
| 2.41 | $1 \times 10^9$ | 5 | 4-5 | 4 | 4-5 | 2 EW | 4 |
| 2.42 | $4 \times 10^9$ | 4 | 5 | 5 | 5 | 2 EW | 5 |
| 2.43 | $7 \times 10^9$ | 5 | 5 | 5 | 5 | 2 EW | 5 |
| 2.44 | $5 \times 10^9$ | 5 | 5 | 5 | 5 | 3 EW | 5 |
| 2.45 | $6 \times 10^9$ | 5 | 5 | 5 | 5 | 3 EW | 5 |
| 2.46 | $4 \times 10^9$ | 5 | 5 | 5 | 5 | 3 EW | 5 |

## Patentansprüche

1. Lichtempfindliches fotografisches Material, das auf einer Seite eines beidseitig mit einer Polyolefinbeschichtung versehenen opaken Schichtträgers eine oder mehrere Silberhalogenidemulsionsschichten und auf der anderen Seite eine Antistatikschicht enthält, dadurch gekennzeichnet, daß die Antistatikschicht silikatfrei ausgebildet ist und auf 1 Gewichtsteil des Antistatikmittels 1,5 - 9 Gewichtsteile eines Bindemittels enthält, das aus 30 - 95 Gew.-% eines carboxylgruppenhaltigen Ölbildners und 70 - 5 Gew.-% eines Polymerlatex (Festsubstanz) besteht.

2. Fotografisches Material nach Anspruch 1, dadurch gekennzeichnet, daß der carboxylgruppenhaltige Ölbildner ein Bernsteinsäurehalbester gemäß einer der Formeln I und II ist

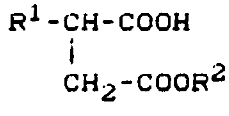

(I)

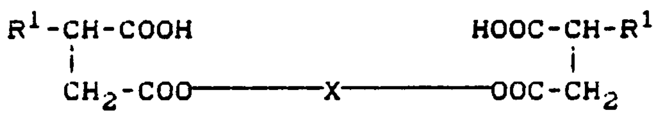

(II)

worin bedeuten

$R^1$ Alkyl oder Alkenyl mit 8-18 C-Atomen;

$R^2$ Alkyl mit 2-12 C-Atomen, geradkettig oder verzweigt und gegebenenfalls durch ein oder mehrere O-Atome unterbrochen (Polyetheralkyl), eine unsubstituierte oder substituierte Cycloalkyl- oder Arylgruppe, einen kondensierten Arylcycloalkyl-Rest, eine Aralkylgruppe oder die Gruppe

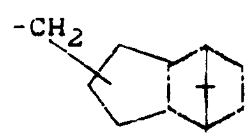

X Cyclohexylen,

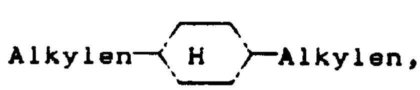

Cycloalkylen-Alkylen-Cycloalkylen oder eine der Gruppen-$CH_2$-$CH_2$-$(O$-$CH_2$-$CH_2)_{3-7}$ und

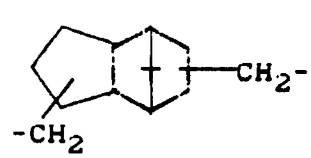

3. Fotografisches Material nach einem der Ansprüche 1 und 2, dadurch gekennzeichnet, daß der Polymerlatex ein Homo- oder Copolymerisat ist von einer oder mehreren ethylenisch ungesättigten polymerisierbaren Verbindungen oder ein Polyurethan.

4. Fotografisches Material nach Anspruch 3, dadurch gekennzeichnet, daß das Copolymerisat 2-5 Gew.-% Acrylsäure einpolymerisiert enthält.

5. Fotografisches Material nach Anspruch 4, dadurch gekennzeichnet, daß das Copolymerisat 40-93 Gew.-% Styrol und 5-58 Gew.-% Butadien einpolymerisiert enthält.

6. Fotografisches Material nach Anspruch 3, dadurch gekennzeichnet, daß der Polymerlatex ganz oder teilweise aus Polytetrafluorethylen besteht.

7. Fotografisches Material nach Anspruch 6, dadurch gekennzeichnet, daß der Polymerlatex auf 1 Gewichtsteil Polytetrafluorethylen 1 - 4 Gewichtsteile eines gegebenenfalls carboxylierten Butadien-Styrol-Copolymerisates umfaßt.

8. Fotografisches Material nach einem der Ansprüche 1-7, gekennzeichnet durch den Gehalt an einem amphoteren Antistatikum, das durch Umsetzung eines kationischen Antistatikums mit einem anionischen Netzmittel erhalten werden kann.

## Claims

1. Photosensitive photographic material which contains on one side of an opaque film support, provided on both sides with a polyolefin coating, one or more silver halide emulsion layers and, on the other side, an antistatic layer, characterised in that the antistatic layer is formulated without silicate and contains 1.5 to 9 parts by weight of a binder for 1 part by weight of the antistatic agent, which binder consists of 30 to 95 wt.% of an oil-former containing carboxyl groups and 70 to 5 wt.% of polymer latex (solids).

2. Photographic material according to claim 1, characterised in that the oil-former, containing carboxyl groups is a succinic acid semi-ester according to one of the formulae I and II

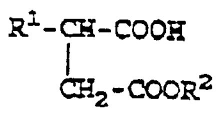

(I)

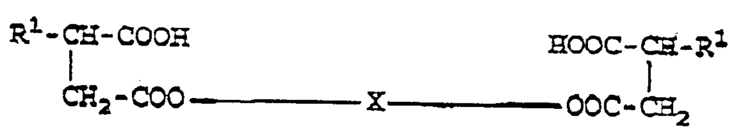

(II)

in which

$R^1$ means alkyl or alkenyl with 8 to 18 C atoms;

$R^2$ means alkyl with 2 to 12 C atoms, linear or branched and optionally interrupted by one or more O atoms (polyether alkyl), an unsubstituted or substituted cylcoalkyl or aryl group, a condensed arylcycloalkyl residue, an aralkyl group or the group

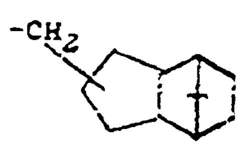

X means cyclohexylene,

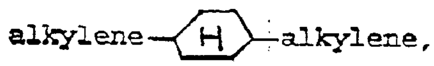

cycloalkylene-alkylene-cycloalkylene or one of the groups $-CH_2-CH_2-(O-CH_2-CH_2)_{3-7}$ and

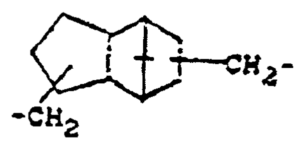

3. Photographic material according to one of claims 1 and 2, characterized in that the polymer latex is a homo- or copolymer of one or more ethylenically unsaturated polymerisable compounds or a polyurethane.

4. Photographic material according to claim 3, characterised in that the copolymer contains 2 to 5 wt.% of polymerised acrylic acid.

5. Photographic material according to claim 4, characterised in that the copolymer contains 40 to 93 wt.% of polymerised styrene and 5 to 58 wt.% of polymerised butadiene.

6. Photographic material according to claim 3, characterised in that the polymer latex entirely or partially consists of polytetrafluoroethylene .

7. Photographic material according to claim 6, characterised in that the polymer latex comprises 1 to 4 parts by weight of an optionally carboxylated butadiene/styrene copolymer for 1 part by weight of polytetrafluoroethylene.

8. Photographic material according to one of claims 1 to 7, characterised by containing an amphoteric antistatic agent, which may be obtained by reacting a cationic antistatic agent with an anionic wetting agent.

## Revendications

1. Matériau photographique photosensible comportant, sur une face d'un support de couche opaque dont les deux faces portent un revêtement de polyoléfine, une ou plusieurs couches d'émulsion d'halogénure d'argent et sur l'autre face, une couche antistatique, caractérisé en ce que la couche antistatique est fabriquée sans silicate et contient, pour une partie en poids d'agent antistatique, de 1,5 à 9 parties en poids d'un agent liant composé d'un agent oléifiant contenant des radicaux carboxyle à raison de 30 à 95 % en poids et d'un latex polymère (substance solide) à raison de 70 à 5 % en poids.

2. Matériau photographique selon la revendication 1, caractérisé en ce que l'agent oléifiant contenant le radical carboxyle est un monoester d'acide succinique de l'une des formules I et II suivantes :

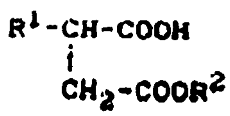 (I)

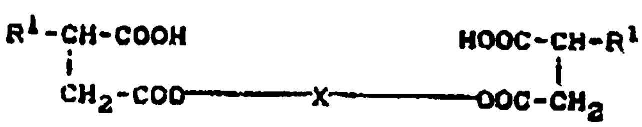 (II)

dans lesquelles

$R^1$ désigne un alkyle ou un alcényle comportant 8 à 18 atomes de C;

$R^2$ désigne un alkyle comportant 2 à 12 atomes de carbone, en chaîne linéaire ou ramifiée, éventuellement interrompue par un ou plusieurs atomes d'oxygène (polyétheralkyle), un radical aryle ou cycloalkyle substitué ou non, un résidu d'arylcycloalkyle condensé, un radical aralkyle ou le radical

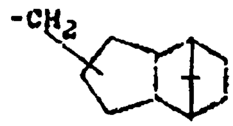

X désigne un cyclohexylène, un

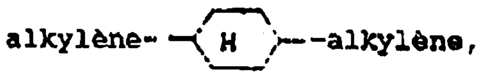

un cycloalkylène-alkylène-cycloalkylène ou un des radicaux $-CH_2-CH_2-(O-CH_2-CH_2)_{3-7}$ et

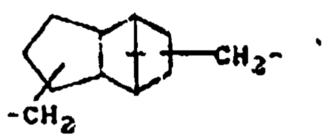

3. Matériau photographique selon les revendications 1 et 2, caractérisé en ce que le latex polymère est un homopolymérisat ou un copolymérisat d'un ou de plusieurs composés polymérisables insaturés de manière éthylénique ou un polyuréthanne.

4. Matériau photographique selon la revendication 3, caractérisé en ce que le copolymérisat contient de 2 à 5 % en poids d'acide acrylique incorporé par polymérisation.

5. Matériau photographique selon la revendication 4, caractérisé en ce que le copolymérisat contient de 40 à 93 % en poids de styrène et de 5 à 58 % en poids de butadiène incorporé par polymérisation.

6. Matériau photographique selon la revendication 3, caractérisé en ce que le latex polymère est composé totalement ou partiellement de polytétrafluroéthylène.

7. Matériau photographique selon la revendication 6, caractérisé en ce que le latex polymère contient, pour une partie en poids de polytétrafluoréthylène, 1 à 4 parties en poids d'un copolymérisat de styrène-butadiène, éventuellement carboxylé.

8. Matériau photographique selon les revendications 1 à 7, caractérisé par sa teneur en un agent antistatique amphotère pouvant être obtenu par réaction d'un agent antistatique cationique avec un agent mouillant anionique.